# FASCICULE DE BREVET EUROPEEN

(11) **EP 3 116 195 B1**
(45) Date de publication et mention de la délivrance du brevet: **02.08.2017**
(21) Numéro de dépôt: 16290113.6
(22) Date de dépôt: 23.06.2016
(51) Int. Cl.: H04L 29/06, H04L 29/08

(54) **INTERFACE ENTRE UN SYSTÈME D'ARME ET UNE LIAISON DE DONNÉES TACTIQUES**
SCHNITTSTELLE ZWISCHEN EINEM VERTEIDIGUNGSSYSTEM UND EINEM TAKTISCHEN DATENLINK
INTERFACE BETWEEN A DEFENSE SYSTEM AND A TACTICAL DATA LINK

(30) Priorité: 08.07.2015 FR 1501441
(43) Date de publication de la demande: 11.01.2017
(73) Titulaire: MBDA France, 92350 Le Plessis-Robinson (FR)
(72) Inventeur: Michaux, Florent, 92350 Le Plessis Robinson (FR)
(74) Mandataire: Gevers & Orès

(56) Documents cités:
- WO-A2-2006/019400
- Serdar Öztürk ET AL: "Multilink Processors (Link 11/16/22) and Integration Architectures", , 27 juin 2014 (2014-06-27), XP055269005, Extrait de l'Internet: URL:http://www.milsoft.com.tr/pdf/Multilin k Processors and Integration Architectures.pdf [extrait le 2016-04-27]
- "M-DLP MULTI-DATA LINK PROCESSOR", , 27 mars 2012 (2012-03-27), XP055268832, Extrait de l'Internet: URL:https://web.archive.org/web/2012032705 4154/http://www.elsagdatamat.com/PDF/Difes a/M_DLP.pdf [extrait le 2016-04-26]

## Description

La présente invention concerne une interface entre un système d'arme et au moins une liaison de données tactiques.

On sait qu'une « liaison de données tactiques » (LDT) dans le domaine militaire met en oeuvre des standards de liaisons de données, en vue de fournir des moyens de communication via des formes d'ondes ou de liaisons filaires. Des systèmes d'information ou de combat utilisent les liaisons de données tactiques standardisées pour transmettre ou recevoir les données tactiques. En France, les liaisons de données de série J (liaison L16, liaison L22) représentent actuellement l'un des standards de référence. Les liaisons de données tactiques sont caractérisées par leurs messages standardisés et par les formats de transmission. Les standards des liaisons de données tactiques sont développés en lien avec des accords de normalisation STANAG (pour « Standardization Agreement » en anglais) appropriés.

Par ailleurs, dans le cadre de la présente invention, la notion de « système d'arme » désigne l'ensemble des dispositifs mécaniques, électroniques et/ou logiciels permettant à des militaires la réalisation d'une mission et la mise en oeuvre d'un armement de façon autonome (identification, localisation, désignation d'objectif, préparation de tir, tir, guidage, ...) ou coordonnée à l'aide d'un centre de commandement et de contrôle (« Command & Control (C2) » en anglais). Il peut être fixe ou embarqué sur un engin terrestre, un navire ou un aéronef. Ainsi, un armement est qualifié de système d'arme lorsqu'il intègre différents équipements pour fonctionner (capteurs, dispositifs électroniques, moyens de communication, ...).

L'interfaçage d'un système d'arme à une liaison de données tactiques pose différents problèmes liés notamment au nombre et à la complexité des interfaces impliquées, et en particulier :
- un problème fonctionnel. En effet, la définition du standard de liaison de données, définit à la fois le type d'informations échangées et la façon d'utiliser les informations. Ce fonctionnement implique une intersection pouvant être importante entre les fonctions du centre de commandement et contrôle et les fonctions de gestion de la liaison de données. L'interfaçage d'un système d'arme nécessite alors plusieurs types de fonctions : des fonctions opérationnelles nécessaires pour faire le lien entre les missions du système et les fonctions d'interface à réaliser, ainsi que des fonctions en communication et liaison de données pour implémenter de façon fiable et performante la liaison. Ces fonctions sont parfois mélangées, créant ainsi des interfaçages systèmes peu adaptés au contexte opérationnel ou des liaisons de données peu fiables ; et
- un problème de gestion de configuration. Le système d'arme et le standard de liaison de données ont leur propre cycle de vie. Cela pose des difficultés d'ingénierie système pour gérer les évolutions des interfaces lors des phases de conceptions et de maintien en conditions opérationnelles. De plus, le standard d'interopérabilité, ainsi que les différents systèmes auxquels il doit se connecter, évoluent lors de la vie du système. Pour ces raisons, l'interfaçage du système d'arme nécessite des évolutions régulières.

Les évolutions des systèmes d'arme actuels, sont souvent problématiques, et de nombreux systèmes d'arme sont peu mis à jour et utilisent des versions de liaisons de données différentes pouvant créer certains problèmes d'interopérabilité.

L'interface du système d'arme à la liaison de données tactiques est généralement mise en oeuvre par un composant logiciel et matériel, par exemple un composant de type DLP (pour « Data Link Processor » en anglais). Son rôle est de permettre au système d'envoyer et de recevoir des messages de la liaison de données. Plusieurs conceptions de composants DLP existent :
- un logiciel DLP monobloc réalisant toutes les fonctions de liaison de données et disposant d'une interface propriétaire qui peut être complexe afin de gérer les redondances entre les fonctions similaires se trouvant dans le système d'arme et le composant ; et
- une librairie DLP nécessitant de s'interfacer directement ou quasi directement avec le coeur du système d'arme et qui ne permet plus une gestion de configuration du système d'arme séparée de sa liaison de données.

L'un des inconvénients majeurs des solutions usuelles est leur manque de modularité ainsi qu'un mélange des aspects opérationnels et des aspects techniques (transmission de données). Ces solutions ne permettent pas au systémier (entreprise conceptrice du système d'arme) de se concentrer uniquement sur son coeur de métier, à savoir l'interfaçage opérationnel de son système d'arme.

Deux organisations sont alors possibles :
- soit le systémier réalise entièrement le composant DLP. Il doit alors développer et maintenir la couche de communication (souvent complexe) pour un coût supérieur à ce que proposerait un sous-traitant spécialiste, qui mutualise les coûts sur tous ses clients ;
- soit le systémier achète la solution monobloc, mais n'a plus la maîtrise totale de l'information opérationnelle émise par son système. L'interface avec le système lui est imposée, le composant monobloc interprète et traduit l'information avec des risques d'erreurs ou de difficultés.

Ces solutions monobloc peuvent également être plus difficiles à faire évoluer pour prendre en compte une évolution d'une norme, un changement de comportement opérationnel ou même un changement de moyen de communication. L'état de l'art le plus proche est le document Serdar Öztürk ET AL: "Multilink Processors (Link 11/16/22) and Integration Architectures", 27 juin 2014 (2014-06-27), XP055269005,Extrait de l'Internet: URL:http://www.milsoft.com.tr/pdf/ Multilink Processors and Integration Architectures.pdf.

La présente invention concerne une interface qui a pour objet de remédier à certains des inconvénients précités. L'interface comprend au moins certains des avantages suivants : elle permet au concepteur d'un système d'arme, de faciliter l'intégration et l'évolution des liaisons de données tactiques dans le système d'arme, afin de gagner en évolutivité, tout en gardant la maîtrise du système d'arme, en diminuant les coûts, en conservant la fiabilité de la liaison et en s'appuyant sur les compétences de spécialistes des liaisons de données tactiques. L'invention est définie par les revendications indépendantes 1, 14 et 15.

La présente invention concerne une interface entre un système d'arme et au moins une liaison de données tactiques, ladite interface étant configurée pour être liée d'une part à un réseau du système d'arme et d'autre part à une unité de communication d'une liaison de données tactiques conforme à un standard particulier, ladite interface comprenant un ensemble de gestion de données.

Selon l'invention, ledit ensemble de gestion de données est de type modulaire et comprend un premier module mettant en oeuvre au moins une fonction opérationnelle et au moins un second module mettant en oeuvre au moins une fonction de communication, lesdits premier et second modules liés ensemble via une liaison dite de transmission, et :
- ladite liaison de transmission présente un standard simplifié directement dérivé du standard de la liaison de transmission de données ;
- ledit premier module est apte à être lié audit réseau du système d'arme et il est configuré :
   - pour traduire un message dit système, reçu dudit réseau, en un message dit intermédiaire, avant une transmission par la liaison de transmission audit second module ;
   - pour traduire un message intermédiaire reçu via la liaison de transmission en au moins un message système, avant une transmission vers ledit réseau ; et
- ledit second module est apte à être lié à l'unité de communication et il est configuré :
   - pour coder un message intermédiaire reçu dudit premier module en un message standard de la liaison de données tactiques, avant une transmission vers ladite unité de communication ; et
   - pour décoder un message standard reçu et le traduire en un message intermédiaire, avant une transmission audit premier module.

Ainsi, grâce à l'invention, on obtient une interface présentant une architecture modulaire qui sépare la ou les fonctions opérationnelles de la ou des fonctions de communication (ou de transmission de données), comme précisé ci-dessous. Plus particulièrement, le premier module réalise les fonctions opérationnelles. Il conçoit l'information à émettre et aiguille l'information reçue. Le concepteur du système d'arme garde ainsi l'entière maîtrise des messages envoyés, en sous-traitant les fonctions de transmission de données (mises en oeuvre par le second module) qui ne font pas partie de son coeur de métier. Cette architecture modulaire et évolutive limite l'impact d'une modification d'une fonction (opérationnelle ou de communication) dans un module sur l'autre module et autorise plus facilement le remplacement complet du second module.

De façon avantageuse, ledit premier module est configuré pour :
- appliquer des premières règles prédéterminées d'émission de message système ;
- réaliser une sélection opérationnelle des informations à transmettre par la liaison de transmission ;
- réaliser une vérification d'une cohérence opérationnelle d'un message intermédiaire reçu via la liaison de transmission.

En outre, de façon avantageuse, ledit premier module met en oeuvre au moins une règle de traduction en émission et au moins une règle de traduction en réception, la règle de traduction en émission spécifie la correspondance entre des champs d'un message système et des champs d'un message intermédiaire, ainsi que le type de conversion, et la règle de traduction en réception spécifie la correspondance entre des champs d'un message intermédiaire et des champs d'un ou plusieurs messages système.

Par ailleurs, avantageusement, ledit second module est configuré pour :
- appliquer des secondes règles prédéterminées d'émission de message ;
- réaliser une gestion du débit d'émission ;
- réaliser une vérification du formatage de messages reçus de la liaison de données tactiques.

Dans un mode de réalisation préféré, ladite liaison de transmission est déterminée en fonction d'une liaison de données tactiques de l'un des types suivants :
- une liaison L16 ;
- une liaison L11 ;
- une liaison L22.

En outre, dans un mode de réalisation particulier, l'interface comporte un premier module unique et au moins deux seconds modules, dont chacun est lié audit premier module via une liaison de transmission. Dans un mode de réalisation particulier, la liaison de transmission est une liaison générique multi-protocole. Une telle liaison générique multi-protocole est donc compatible avec l'invention.

Par ailleurs, dans une première variante de réalisation, l'interface comporte au moins deux éléments matériels, le premier module étant intégré dans l'un de ces éléments matériels et le second module étant intégré dans l'autre de ces éléments matériels.

En outre, dans une seconde variante de réalisation, l'interface comporte un élément matériel, les premier et second modules étant tous deux intégrés dans cet élément matériel.

La présente invention concerne également un système d'arme, qui comporte au moins une interface telle que décrite ci-dessus.

La présente invention concerne, en outre, un procédé d'interfaçage entre un système d'arme et au moins une liaison de données tactiques, pour réaliser une interface entre d'une part un réseau du système d'arme et d'autre part une unité de communication de la liaison de données tactiques conforme à une spécification particulière (standard ou propriétaire).

Selon l'invention, ledit procédé comprend :
- une première étape mise en oeuvre dans un premier module réalisant au moins une fonction opérationnelle et apte à être lié audit réseau du système d'arme, la première étape consistant :
   - dans un sens sortant du système d'arme, à traduire un message dit système, reçu dudit réseau du système d'arme, en un message dit intermédiaire, avant une transmission par une liaison de transmission à un second module, ladite liaison de transmission présentant un standard simplifié directement dérivé du standard de la liaison de transmission de données ; et
   - dans un sens entrant dans le système d'arme, à traduire un message intermédiaire reçu via la liaison de transmission en un message système, avant une transmission vers ledit réseau ; et
- une seconde étape mise en oeuvre dans le second module réalisant au moins une fonction de communication et apte à être lié à l'unité de communication, la seconde étape consistant :
   - dans un sens sortant du système d'arme, à coder un message intermédiaire reçu dudit premier module en un message adapté à l'unité de communication de la liaison de données tactiques, avant une transmission vers ladite unité de communication ; et
   - dans un sens entrant dans le système d'arme, à décoder un message standard reçu et à le traduire en un message intermédiaire, avant une transmission audit premier module

Les figures annexées feront bien comprendre comment l'invention peut être réalisée. Sur ces figures, des références identiques désignent des éléments semblables.
La figure 1 est le schéma synoptique d'une interface selon un mode de réalisation préféré de l'invention.
La figure 2 est le schéma synoptique d'un mode de réalisation particulier d'une interface.

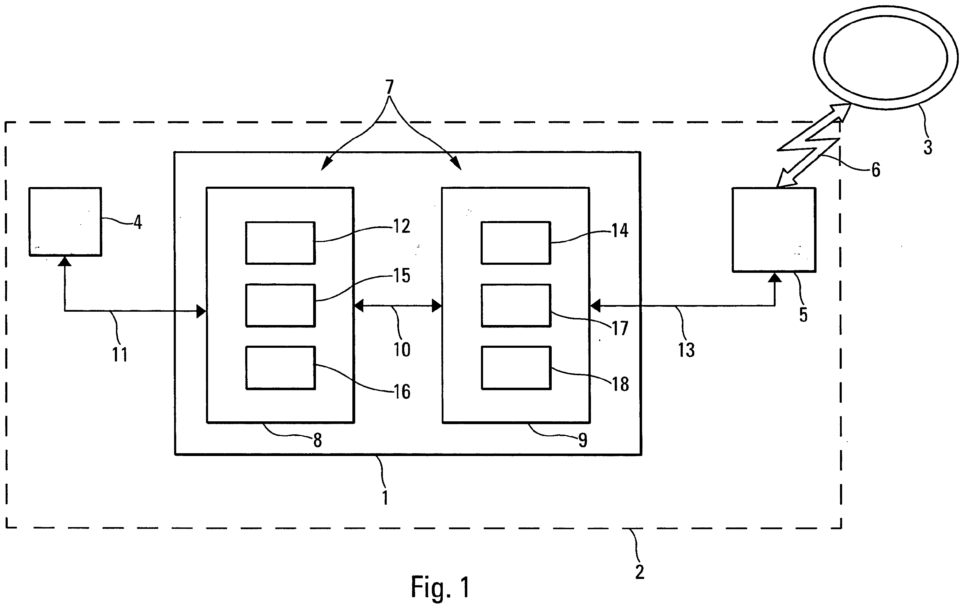

L'interface 1 illustrant l'invention et représentée schématiquement sur la figure 1 est destinée à créer une liaison à double sens entre un système d'arme 2 et au moins une liaison de données tactiques 3 représentée schématiquement, qui est conforme à un standard (ou protocole standard) particulier, comme précisé ci-dessous.

Plus précisément, cette interface 1 est configurée pour être liée d'une part à un réseau 4 du système d'arme 2 et d'autre part à une unité de communication 5 apte à communiquer avec la liaison de données tactiques 3, comme illustré par une flèche 6.

L'interface 1, le réseau 4 et le moyen de communication 5 sont embarqués sur le système d'arme 2. L'interface 1 comprend un ensemble 7 de gestion de données.

Selon l'invention, cet ensemble 7 de gestion de données est de type modulaire, et il comporte un premier module 8 et au moins un second module 9 liés ensemble via une liaison 10 dite de transmission.

De plus, selon l'invention :
- la liaison de transmission 10 présente un standard simplifié qui est directement dérivé du standard (par exemple liaison L16) de la liaison de transmission de données 3. On entend par « directement dérivé » (ou « calqué ») que la liaison de transmission 10 est une liaison simplifiée, basée sur le standard de la liaison de transmission de données 3, dont on a uniquement conservé les caractéristiques nécessaires, comme précisé ci-dessous ;
- le module 8 (par exemple, un module dit « haut ») met en oeuvre une ou plusieurs fonctions opérationnelles, il est apte à être lié au réseau 4 du système d'arme 2, comme illustré par une liaison 11, et il comporte une unité de traduction 12 configurée :
   - pour traduire un message dit système, reçu du réseau 4 (via la liaison 11), en un message dit intermédiaire, avant une transmission par la liaison de transmission 10 au module 9 ; et
   - pour traduire un message intermédiaire reçu via la liaison de transmission 10 en au moins un message système, avant une transmission (via la liaison 11) vers le réseau 4 ; et
- le module 9 (par exemple, un module dit « bas ») met en oeuvre une ou plusieurs fonctions de communication, il est apte à être lié à l'unité de communication 5 comme illustré par une liaison 13, et il comporte une unité de codage/décodage 14 configurée :
   - pour coder un message intermédiaire reçu du module 8 (via la liaison de transmission 10) en un message standard de la liaison de données tactiques, avant une transmission vers l'unité de communication 5 (via la liaison 13) ; et
   - pour décoder un message standard reçu (via la liaison 13) et le traduire en un message intermédiaire, avant une transmission au module 8 (via la liaison de transmission 10).

Chacun des modules 8 et 9 peut être un composant d'un DLP (pour « Data Link Processor » en anglais).

Dans le cadre de la présente invention :
- le système d'arme 2 représente un ensemble de dispositifs mécaniques, électroniques et/ou logiciels permettant à des militaires la réalisation d'une mission et la mise en oeuvre d'un armement. Il peut être fixe ou embarqué sur un engin terrestre, un navire ou un aéronef ;
- le réseau 4 du système d'arme 2 comprend une unité de traitement de données, de calcul et/ou de commande qui met en oeuvre des algorithmes usuels pour la commande du système d'arme. Généralement, ce réseau 4 représente le coeur du système d'arme et permet de dialoguer avec toutes les fonctions du système d'arme, par exemple la gestion de la situation tactique, les états des sous systèmes, les commandes armements, ... ;
- l'unité de communication 5 correspond à tout type de moyen de communication usuel permettant de communiquer, par une liaison 6 filaire ou radio par exemple, avec la liaison de données tactiques 3 ;
- une fonction opérationnelle est une fonction réalisée par le système d'arme 2, concernant le fonctionnement et la mise en oeuvre du système d'arme 2 ;
- une fonction de communication ou de transmission de données est une fonction relative à la gestion et à la mise en oeuvre d'une transmission de données.

Avec cette architecture de l'interface 1 comprenant deux modules 8 et 9 distincts, on décorrèle les tâches de création du contenu d'un message (mises en oeuvre par le module 8) des tâches de formatage et de transmission du message (mises en oeuvre par le module 9). On prévoit ainsi, à partir d'une librairie DLP, d'ajouter une interface 1 standardisée et simplifiée entre des fonctions (dans le module 8) ayant un lien fort avec le système d'arme (opérationnel) et des fonctions (dans le module 9) présentant un intérêt uniquement relatif à la liaison de données (technique).

Dans le but de permettre la transmission de toutes les informations possibles par la liaison de données standard (par exemple une liaison L16) et éviter des erreurs d'interprétation de la part du module 9, on ne met pas en oeuvre de sélection de champs utiles : il y a une correspondance 1 pour 1 entre les messages standards et les messages intermédiaires.

En outre, pour être facile à implémenter et décoder, la liaison de transmission 10 (pour les messages intermédiaires) s'affranchit des contraintes de codage du standard. Les informations sont codées en type informatique classique (int, double, char,...) et en unités SI.

La liaison de transmission 10 est asynchrone et bidirectionnelle. Elle n'est pas contrainte en débit ou synchronisation d'émission (chaque composant émet une information quand il le souhaite).

L'interface 1 est ainsi configurée pour permettre de transmettre toutes les informations utiles, être facile à intégrer et à faire évoluer.

L'interface 1 permet au concepteur du système d'arme 2 de faciliter l'intégration et l'évolution des liaisons de données tactiques dans le système d'arme 2, afin de gagner en évolutivité, tout en gardant la maîtrise du système d'arme 2, en diminuant les coûts, en conservant la fiabilité de la liaison et en s'appuyant sur les compétences de spécialistes des liaisons de données tactiques.

Le module 8 de l'interface 1 assure donc la traduction entre les messages système et les messages intermédiaires, et inversement. La relation messages système/messages intermédiaires n'est pas bijective.

Le module 8 est configuré pour appliquer des premières règles prédéterminées d'émission de message système correspondant à la politique d'émission (quand envoyer un message, quel message envoyer avec quel contenu), en fonction de l'état du système et des messages système reçus.

Par ailleurs, le module 8 comporte une unité de sélection 15 qui réalise une sélection opérationnelle des informations à transmettre par la liaison de transmission 10. Cette unité de sélection 15 réalise également une synthèse des états du système.

Le module 8 comporte également une unité de vérification 16 qui, en réception, vérifie la cohérence opérationnelle d'un message (complétion des données pour être correctement interprétées par le système, cohérence des données du message) et traduit le message en un ou plusieurs messages système. La vérification de la cohérence des données peut consister à vérifier des champs obligatoirement remplis, des champs avec une plage de valeurs autorisées. Ces vérifications peuvent être conditionnelles au remplissage d'un champ (si un champ X est renseigné, alors un champ Y doit également être renseigné).

En outre, le module 8 met en oeuvre des règles de traduction en émission et des règles de traduction en réception. Une règle de traduction en émission spécifie la correspondance entre des champs d'un message système et des champs d'un message intermédiaire, ainsi que le type de conversion. En outre, une règle de traduction en réception spécifie la correspondance entre des champs d'un message intermédiaire et des champs d'un ou plusieurs messages système. Plusieurs règles de conversion peuvent être spécifiées en fonction d'un état ou d'une valeur spécifique d'un champ.

Par ailleurs, le module 9 de l'interface 1 traduit donc les messages intermédiaires en messages standard (STANAG), à l'aide de l'unité de codage/décodage 14. La relation entre les messages intermédiaires et les messages standard est bijective.

Le module 9 se connecte à l'unité de communication 5 (radio, routeur, ...) en respectant un protocole standard (STANAG, par exemple SIMPLE, JREAP, ...) ou propriétaire.

Le module 9 comporte une unité de gestion 17 qui gère le débit de connexion (type de messages, sous-échantillonnage de messages, gestion des priorités, ...). Il applique des règles d'émission de messages qui correspondent à la politique d'émission sélectionnée par l'opérateur. Dans le cas du protocole JREAP (pour « Joint Range Extension Applications Protocol » en anglais), le module 9 simule l'unité de communication en émettant des accusés de réception machine.

Le module 9 comporte également une unité de vérification 18 qui, en réception, vérifie le formatage correct des messages.

Dans un mode de réalisation préféré, ladite liaison de transmission 10 est calquée (en étant simplifiée) sur une liaison de données tactiques standard (qui est complexe), de préférence de l'un des types suivants :
- une liaison L16 (de série J) ;
- une liaison L11 (de série M) ;
- une liaison L22 (de série J).

Bien entendu, cette liste de liaison de données tactiques possibles n'est pas exclusive.

Dans un mode de réalisation préféré, la liaison de données tactiques considérée est une liaison L16. La liaison L16 est un standard de liaison de données tactiques de l'OTAN pour l'échange d'informations tactiques entre des unités militaires. Le contenu de sa messagerie et le protocole d'émission sont définis par le STANAG 5516 pour l'OTAN. Sa mise en oeuvre opérationnelle est définie dans le document OTAN ADatP 33 qui est un ensemble de procédures permettant la mise en oeuvre d'un réseau de liaisons de données tactiques multi-liaisons et de l'ADatP 16 propre à la liaison L16.

Pour la création des messages intermédiaires (relatifs au standard L16 par exemple), l'interface 1 (et notamment le module 9) tient compte des caractéristiques suivantes :
- valeurs physiques (LSB, ...) : double unité SI ;
- énumérés : « short », codage L16 ;
- caractères (TN, VCS, ...) : « char string » ;
- énumérés booléen : « short » (booléen) ;
- énumérés hybride (valeurs physiques avec LSB + énumérés, par exemple « Voice Frequency Channel ») : « short » avec codage L16, pas de conversion ; et
- « switch » (énuméré indiquant quel champ est actif). Tous les champs possibles sont inclus dans le message intermédiaire (énumérés et champs possibles).

Les détails de la composition des messages intermédiaires peuvent changer en fonction des besoins et contraintes du système d'arme. Ainsi, certaines règles ci-dessus peuvent être modifiées. En particulier, on peut prévoir :
- la sélection d'une partie seulement d'un message standard, en enlevant les parties totalement inutiles au système ;
- l'utilisation d'une unité non SI, par exemple pour éviter des doubles conversions inutiles ; et
- l'ajout de contraintes en débit sur la liaison intermédiaire. Cet ajout peut être nécessaire si le débit des messages système est trop important.

L'interface 1, telle que décrite ci-dessus, présente donc une architecture modulaire qui sépare les fonctions opérationnelles des fonctions de communication (ou transmission). Plus particulièrement, le module 8 réalise les fonctions opérationnelles. Il conçoit l'information à émettre et aiguille l'information reçue. Le concepteur du système d'arme garde ainsi l'entière maîtrise des messages envoyés, en sous-traitant les fonctions de transmission de données (mises en oeuvre par le module 9) qui ne font pas partie de son coeur de métier. Cette architecture modulaire et évolutive limite l'impact d'une modification d'une fonction (opérationnelle ou de communication) dans un module 8, 9 sur l'autre module 9, 8, et autorise plus facilement le remplacement complet du module 8 ou 9.

L'interface 1 permet ainsi de :
- faire évoluer facilement le comportement du système d'arme 2 sur la liaison de données tactiques, sans contraintes liées aux aspects de communication ; et
- faire évoluer facilement les standards ou moyens de communication sans impacter le système d'arme 2.

L'interface 1 est par conséquent simple et facile à implémenter. Elle est facilement évolutive afin de suivre les modifications des composants. Elle se concentre sur le contenu du message sans pour autant présenter d'ambiguïtés nécessitant des interprétations du module 9 (transmission de l'information).

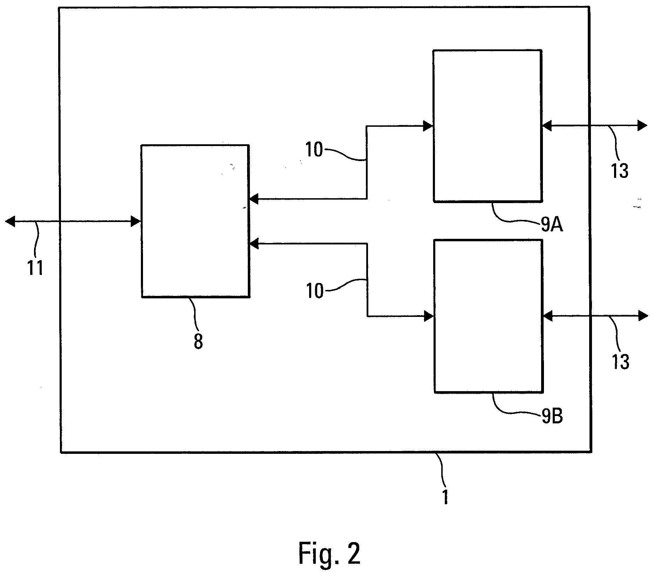

Dans un mode de réalisation particulier représenté sur la figure 2, l'interface 1 comporte un module 8 unique et au moins deux modules 9A et 9B, dont chacun est lié audit module 8 via une liaison de transmission 10.

Dans ce cas, on peut utiliser l'interface 1 pour connecter le système d'arme 2 à plusieurs liaisons de données tactiques différentes (via lesdits modules 9A et 9B). Le module 8 gère alors plusieurs liaisons de données et traite les messages en fonction des besoins du système d'arme 2 (avec une adaptation en temps réel possible). Les différentes liaisons de transmission 10 sont conçues de la même façon et peuvent partager le même moyen de communication.

Par ailleurs, dans une première variante de réalisation (non représentée), l'interface 1 comporte au moins deux éléments matériels. Le module 8 est intégré dans l'un de ces éléments matériels et le module 9 est intégré dans l'autre de ces éléments matériels.

En outre, dans une seconde variante de réalisation (non représentée), l'interface 1 comporte un élément matériel. Les modules 8 et 9 sont tous deux intégrés dans ce même élément matériel.

L'interface logicielle de l'interface 1 n'est pas imposée. Elle peut être réalisée via une connexion réseau classique (UDP, TCP, ...) afin de distribuer les composants logiciels sur différents machines ou bien pour une intégration d'un des composants DLP via des API, ou même une intégration de code source, l'interface étant alors une interface de fonctions logicielles.

## Revendications

1. Interface entre un système d'arme et au moins une liaison de données tactiques, ladite interface (1) étant configurée pour être liée d'une part à un réseau (4) du système d'arme (2) et d'autre part à une unité de communication (5) d'une liaison de données tactiques (3) conforme à un standard particulier, ladite interface (1) comprenant un ensemble de gestion de données (7),
tel que ledit ensemble de gestion de données (7) est de type modulaire et comprend un premier module (8) mettant en oeuvre au moins une fonction opérationnelle et au moins un second module (9 ; 9A, 9B) mettant en oeuvre au moins une fonction de communication, lesdits premier et second modules étant liés ensemble via une liaison dite de transmission (10), et en ce que :
- ladite liaison de transmission (10) présente un standard simplifié directement dérivé du standard de la liaison de transmission de données (3) ;
- ledit premier module (8) est apte à être lié audit réseau (4) du système d'arme (2) et il est configuré :
• pour traduire un message dit système, reçu dudit réseau (4), en un message dit intermédiaire, avant une transmission par la liaison de transmission (10) audit second module (9 ; 9A, 9B) ; et
• pour traduire un message intermédiaire reçu via la liaison de transmission (10) en au moins un message système, avant une transmission vers ledit réseau (4) ; et
- ledit second module (9 ; 9A, 9B) est apte à être lié à l'unité de communication (5) et il est configuré :
• pour coder un message intermédiaire reçu dudit premier module (8) en un message standard de la liaison de données tactiques (3), avant une transmission vers ladite unité de communication (5) ; et
• pour décoder un message standard reçu et le traduire en un message intermédiaire, avant une transmission audit premier module (8).

2. Interface selon la revendication 1,
**caractérisée en ce que** ledit premier module (8) est configuré pour appliquer des premières règles prédéterminées d'émission de message système.

3. Interface selon l'une des revendications 1 et 2,
**caractérisée en ce que** ledit premier module (8) est configuré pour réaliser une sélection opérationnelle des informations à transmettre par la liaison de transmission (10).

4. Interface selon l'une des revendications 1 à 3,
**caractérisée en ce que** ledit premier module (8) est configuré pour réaliser une vérification d'une cohérence opérationnelle d'un message intermédiaire reçu via la liaison de transmission (10).

5. Interface selon quelconque des revendications précédentes, **caractérisée en ce que** ledit premier module (8) met en oeuvre au moins une règle de traduction en émission et au moins une règle de traduction en réception, **en ce que** la règle de traduction en émission spécifie la correspondance entre des champs d'un message système et des champs d'un message intermédiaire, ainsi que le type de conversion, et **en ce que** la règle de traduction en réception spécifie la correspondance entre des champs d'un message intermédiaire et des champs d'un ou plusieurs messages système.

6. Interface selon l'une quelconque des revendications précédentes,
**caractérisée en ce que** ledit second module (9 ; 9A, 9B) est configuré pour appliquer des secondes règles prédéterminées d'émission de message.

7. Interface selon l'une quelconque des revendications précédentes,
**caractérisée en ce que** ledit second module (9 ; 9A, 9B) est configuré pour réaliser une gestion du débit d'émission.

8. Interface selon l'une quelconque des revendications précédentes,
**caractérisée en ce que** ledit second module (9 ; 9A, 9B) est configuré pour réaliser une vérification du formatage de messages reçus de la liaison de données tactiques (3).

9. Interface selon l'une quelconque des revendications précédentes,
**caractérisée en ce que** ladite liaison de transmission (10) est déterminée en fonction d'une liaison de données tactiques (3) de l'un des types suivants :
- une liaison L16 ;
- une liaison L11 ;
- une liaison L22.

10. Interface selon l'une quelconque des revendications précédentes,
**caractérisée en ce que** ladite liaison de transmission (10) est une liaison générique multi-protocole.

11. Interface selon l'une quelconque des revendications précédentes,
**caractérisée en ce qu'**elle comporte un premier module (8) unique et au moins deux seconds modules (9A, 9B), dont chacun est lié audit premier module (8) via une liaison de transmission (10).

12. Interface selon l'une quelconque des revendications 1 à 11, **caractérisée en ce qu'**elle comporte au moins deux éléments matériels, le premier module étant intégré dans l'un de ces éléments matériels et le second module étant intégré dans l'autre de ces éléments matériels.

13. Interface selon l'une quelconque des revendications 1 à 11, **caractérisée en ce qu'**elle comporte un élément matériel, les premier et second modules étant tous deux intégrés dans cet élément matériel.

14. Système d'arme,
tel qu'il comporte au moins une interface (1) telle que celle spécifiée sous l'une quelconque des revendications 1 à 13.

15. Procédé d'interfaçage entre un système d'arme (2) et au moins une liaison de données tactiques (3), pour réaliser une interface entre d'une part un réseau (4) du système d'arme (2) et d'autre part une unité de communication (5) de la liaison de données tactiques (3) qui est conforme à un standard particulier,
tel qu'il comprend :
- une première étape mise en oeuvre dans un premier module (8) réalisant au moins une fonction opérationnelle et apte à être lié audit réseau (4) du système d'arme (2), la première étape consistant :
• dans un sens sortant du système d'arme (2), à traduire un message dit système, reçu dudit réseau (4) du système d'arme (2), en un message dit intermédiaire, avant une transmission par une liaison de transmission (10) à un second module (9 ; 9A, 9B), ladite liaison de transmission (10) présentant un standard simplifié directement dérivé du standard de la liaison de transmission de données (3) ; et
• dans un sens entrant dans le système d'arme (2), à traduire un message intermédiaire reçu via la liaison de transmission (10) en un message système, avant une transmission vers ledit réseau (4) ; et
- une seconde étape mise en oeuvre dans le second module (9 ; 9A, 9B) réalisant au moins une fonction de communication et apte à être lié à l'unité de communication (5), la seconde étape consistant :
• dans un sens sortant du système d'arme (2), à coder un message intermédiaire reçu dudit premier module (8) en un message standard de la liaison de données tactiques (3), avant une transmission vers ladite unité de communication (5) ; et
• dans un sens entrant dans le système d'arme (2), à décoder un message standard reçu et à le traduire en un message intermédiaire, avant une transmission audit premier module (8).

## Patentansprüche

1. Schnittstelle zwischen einem Waffensystem und mindestens einer Verbindung von taktischen Daten, wobei die Schnittstelle (1) dazu konfiguriert ist, einerseits mit einem Netz (4) des Waffensystems (2) und andererseits mit einer Kommunikationseinheit (5) einer Verbindung von taktischen Daten (3) gemäß einem bestimmten Standard verbunden zu sein, wobei die Schnittstelle (1) einen Verwaltungsverbund von Daten (7) umfasst,
derart, dass der Verwaltungsverbund von Daten (7) vom modularen Typ ist und ein erstes Modul (8), das mindestens eine Betriebsfunktion bereitstellt, und mindestens ein zweites Modul (9; 9A; 9B) umfasst, das mindestens eine Kommunikationsfunktion bereitstellt, wobei die ersten und zweiten Module miteinander über eine Übertragungsverbindung (10) verbunden sind, und dass:
- die Übertragungsverbindung (10) einen vereinfachten Standard aufweist, der direkt vom Standard der Übertragungsverbindung der Daten (3) abgeleitet ist;
- das erste Modul (8) dazu imstande ist, mit dem Netz (4) des Waffensystems (2) verbunden zu werden, und dass es konfiguriert ist:
• zum Übersetzen einer Nachricht des Systems, die von dem Netz (4) empfangen wurde, in eine Zwischennachricht, und zwar vor einer Übertragung mittels der Übertragungsverbindung (10) zum zweiten Modul (9; 9A, 9B); und
• zum Übersetzen einer Zwischennachricht, die über die Übertragungsverbindung (10) empfangen wurde, in mindestens eine Systemnachricht, und zwar vor der Übertragung in Richtung des Netzes (4); und
- das zweite Modul (9; 9A, 9B) dazu imstande ist, mit der Kommunikationseinheit (5) verbunden zu werden, und dass es konfiguriert ist:
• zum Kodieren einer Zwischennachricht, die vom ersten Modul (8) empfangen wurde, in eine Standardnachricht der Verbindung der taktischen Daten (3), und zwar vor einer Übertragung in Richtung der Kommunikationseinheit (5); und
• zum Dekodieren einer empfangen Standardnachricht und zum Übersetzen dieser in eine Zwischennachricht, und zwar vor der Übertragung an das erste Modul (8).

2. Schnittstelle nach Anspruch 1,
**dadurch gekennzeichnet, dass** das erste Modul (8) dazu konfiguriert ist, erste vorbestimmte Systemnachricht-Aussendungsregeln anzuwenden.

3. Schnittstelle nach einem der Ansprüche 1 und 2, **dadurch gekennzeichnet, dass** das erste Modul (8) dazu konfiguriert ist, eine Betriebsauswahl von Informationen zu verwirklichen, die mittels der Übertragungsverbindung (10) zu übertragen sind.

4. Schnittstelle nach einem der Ansprüche 1 bis 3,
**dadurch gekennzeichnet, dass** das erste Modul (8) dazu konfiguriert ist, eine Überprüfung einer Betriebskohärenz einer Zwischennachricht zu verwirklichen, die über die Übertragungsverbindung (10) empfangen wurde.

5. Schnittstelle nach einem der vorhergehenden Ansprüche, **dadurch gekennzeichnet, dass** das erste Modul (8) mindestens eine Übersetzungsregel bei der Aussendung und mindestens eine Übersetzungsregel beim Empfang bereitstellt, dass die Übersetzungsregel bei der Aussendung die Korrespondenz zwischen Feldern einer Systemnachricht und Feldstärken einer Zwischennachricht spezifiziert, sowie den Umwandlungstyp, und dass die Übersetzungsregel beim Empfang die Korrespondenz zwischen Feldern einer Zwischennachricht und Feldstärken einer oder mehrerer Systemnachrichten spezifiziert.

6. Schnittstelle nach einem der vorhergehenden Ansprüche,
**dadurch gekennzeichnet, dass** das zweite Modul (9; 9A, 9B) dazu konfiguriert ist, zweite vorbestimmte Nachricht-Aussendungsregeln anzuwenden.

7. Schnittstelle nach einem der vorhergehenden Ansprüche,
**dadurch gekennzeichnet, dass** das zweite Modul (9; 9A, 9B) dazu konfiguriert ist, eine Verwaltung des Aussendungsdurchsatzes zu verwirklichen.

8. Schnittstelle nach einem der vorhergehenden Ansprüche,
**dadurch gekennzeichnet, dass** das zweite Modul (9; 9A, 9B) dazu konfiguriert ist, eine Überprüfung der Formatierung der von der Verbindung von taktischen Daten (3) empfangenen Nachrichten zu verwirklichen.

9. Schnittstelle nach einem der vorhergehenden Ansprüche,
**dadurch gekennzeichnet, dass** die Übertragungsverbindung (10) zur Funktion einer Verbindung von taktischen Daten (3) einer der folgenden Typen bestimmt ist:
• einer Verbindung L16;
• einer Verbindung L11;
• einer Verbindung L22.

10. Schnittstelle nach einem der vorhergehenden Ansprüche,
**dadurch gekennzeichnet, dass** die Übertragungsverbindung (10) eine generische Multiprotokollverbindung ist.

11. Schnittstelle nach einem der vorhergehenden Ansprüche,
**dadurch gekennzeichnet, dass** sie ein einziges erstes Modul (8) und mindestens zwei zweite Module (9A, 9B) umfasst, von welchen jedes mit dem ersten Modul (8) über eine Übertragungsverbindung (10) verbunden ist.

12. Schnittstelle nach einem der Ansprüche 1 bis 11,
**dadurch gekennzeichnet, dass** sie mindestens zwei Hardwareelemente umfasst, wobei das erste Modul in eines der Hardwareelemente integriert ist und das zweite Modul in das andere der Hardwareelemente integriert ist.

13. Schnittstelle nach einem der Ansprüche 1 bis 11,
**dadurch gekennzeichnet, dass** sie ein Hardwareelement umfasst, wobei die ersten und zweiten Module sämtlich in das Hardwareelement integriert sind.

14. Waffensystem, derart, dass es mindestens eine Schnittstelle (1) umfasst,
derart, dass sie nach einem der Ansprüche 1 bis 13 spezifiziert ist.

15. Schnittstellenverfahren zwischen einem Waffensystem (2) und mindestens einer Verbindung von taktischen Daten (3) zum Verwirklichen einer Schnittstelle zwischen einerseits einem Netz (4) des Waffensystems (2) und andererseits einer Kommunikationseinheit (5) einer Verbindung von taktischen Daten (3), die einem bestimmten Standard entspricht,
derart, dass es umfasst:
- einen ersten Schritt, der in einem ersten Modul (8) bereitstellt ist, das mindestens eine Betriebsfunktion verwirklicht und dazu imstande ist, mit dem Netz (4) des Waffensystems (2) verbunden zu werden, wobei der erste Schritt besteht aus:
• in einer Richtung, in der das Waffensystem (2) verlassen wird, Übersetzen einer Nachricht des Systems, die über das Netz (4) vom Waffensystem (2) empfangen wurde, in eine Zwischennachricht, und zwar vor einer Übertragung mittels einer Übertragungsverbindung (10) an ein zweites Modul (9; 9A, 9B), wobei die Übertragungsverbindung (10) einen vereinfachten Standard aufweist, der direkt vom Standard der Übertragungsverbindung der Daten (3) abgeleitet ist; und
• in einer Richtung, in der in das Waffensystem (2) hineingekommen wird, Übersetzen einer Zwischennachricht, die über die Verbindung (10) empfangen wurde, in eine Systemnachricht, und zwar vor einer Übertragung über das Netz (4); und
- einen zweiten Schritt, der im zweiten Modul (9; 9A, 9B) bereitstellt ist, das mindestens eine Kommunikationsfunktion verwirklicht und dazu imstande ist, mit der Kommunikationseinheit (5) verbunden zu sein, wobei der zweite Schritt besteht aus:
• in einer Richtung, in der das Waffensystem (2) verlassen wird, Kodieren einer Zwischennachricht, die von dem ersten Modul (8) empfangen wurde, in eine Standardnachricht der Verbindung von taktischen Daten (3), und zwar vor einer Übertragung in Richtung der Kommunikationseinheit (5); und
• in einer Richtung, in welcher in das Waffensystem (2) hineingekommen wird, Dekodieren einer empfangenen Standardnachricht, und Übersetzen dieser in eine Zwischennachricht, und zwar vor einer Übertragung an das erste Modul (8).

## Claims

1. Interface between a weapon system and at least one tactical data link, said interface (1) being configured to be linked on the one hand to a network (4) of the weapon system (2) and on the other hand to a communication unit (5) of a tactical data link (3) according to a particular standard, said interface (1) comprising a data management unit (7), such that said data management unit (7) is of modular type and comprises a first module (8) using at least one operational function and at least a second module (9; 9A, 9B) using at least one communication function, said first and second modules being linked together over said transmission link (10), and in that:
- said transmission link (10) has a simplified standard derived directly from the standard of the data transmission link (3);
- said first module (8) is capable of being connected to said network (4) of the weapon system (2) and is configured:
• to translate a system message, received from said network (4), into an intermediate message, before transmission over the transmission link (10) to said second module (9; 9A, 9B); and
• to translate an intermediate message, received from the transmission link (10) into at least one system message, before transmission to said network (4); and
- said second module (9; 9A, 9B) is capable of being linked to the communication unit (5) and is configured:
• to encode an intermediate message received from said module (8) into a standard message of the tactical data link (3), before transmission to said communication unit (5); and
• to decode a received standard message and translate it into an intermediate message, before transmission to said first module (8)

2. Interface according to the claim 1,
**characterised in that** said first module (8) is configured to apply the first predetermined rules of system message transmission.

3. Interface according to one of the claims 1 and 2,
**characterised in that** said first module (8) is configured to produce an operational selection of the information to be transmitted by the transmission link (10).

4. Interface according to one of the claims 1 to 3,
**characterised in that** said first module (8) is configured to carry out a verification of operational consistency of an intermediate message received from the transmission link (10).

5. Interface according to any one of the previous claims,
**characterised in that** said first module (8) implements at least one translation rule in transmission and at least one translation rule in reception, **in that** this translation rule in transmission specifies the correspondence between the fields of a system message and the fields of an intermediate message, as well the type of conversion, and **in that** the translation rule in reception specifies the correspondence between the fields of an intermediate message and the fields of one or several system messages.

6. Interface according to any one of the previous claims,
**characterised in that** said second module (9; 9A, 9B) is configured to apply the first predetermined rules of system message transmission.

7. Interface according to any one of the previous claims,
**characterised in that** said second module (9; 9A, 9B) is configured to manage the transmission flow.

8. Interface according to any one of the previous claims,
**characterised in that** said second module (9; 9A, 98) is configured to verify the formatting of messages received from the tactical data link (3).

9. Interface according to any one of the previous claims,
**characterised in that** said transmission link (10) is determined according to a tactical data link (3) of one of the following types:
- a L16 link;
- a L11 link;
- a L22 link.

10. Interface according to any one of the previous claims,
**characterised in that** said transmission link (10) is a multi-protocol generic link.

11. Interface according to any one of the previous claims,
**characterised in that** it comprises a single first module (8) and at least two second modules (9A, 9B), each of which is linked to said first module (8) by a transmission link (10).

12. Interface according to any one of the previous claims 1 to 11,
**characterised in that** it comprises at least two material elements, the first module being integrated in one of these material elements and the second module being integrated in the other of these material elements.

13. Interface according to any one of the claims 1 to 11,
**characterised in that** it comprises one material element, the first and second modules being both integrated in this material element.

14. Weapon system, such that it comprises at least one interface (1) such as that specified under any one of claims 1 to 13.

15. Method of interfacing between one weapon system (2) and at least one tactical data link (3), to produce an interface between on the one hand a network (4) of the weapon system (2) and on the other hand a communication unit (5) of the tactical data link (3) which complies with a particular standard, such that it comprises:
- a first step implemented in a first module (8) producing at least one operational function and capable of being linked to said network (4) of the weapon system (2), the first step consisting:
• in a direction leaving the weapon system (2), in translating a system message, received from said network (4) of the weapon system (2), into an intermediate message, before transmission by a transmission link (10) to a second module (9; 9A, 9B), said transmission link (10) having a simplified standard derived directly from the standard of the data transmission link (3); and
• in a direction entering the weapon system (2), in translating an intermediate message received from the transmission link (10) into a system message, before transmission to said network (4); and
- a second step implemented in the second module (9; 9A, 9B) producing at least one communication function and capable of being linked to the communication unit (5), the second step consisting:
• in a direction leaving the weapon system (2), in encoding an intermediate message received from said fist module (8) into a standard message of the tactical data link (3), before transmission to said communication unit (5); and
• a in a direction entering the weapon system (2), in decoding a received standard message and translating it into an intermediate message, before transmission to said first module (8).
